# EUROPÄISCHE PATENTSCHRIFT

(11) **EP 0 833 780 B1**
(45) Veröffentlichungstag und Bekanntmachung des Hinweises auf die Patenterteilung: **05.01.2000**
(21) Anmeldenummer: 96920829.7
(22) Anmeldetag: 19.06.1996
(51) Int. Cl.: B65D 35/22

(54) **VERFAHREN ZUR HERSTELLUNG EINES ROHRKÖRPERS UND VERFAHREN ZUR HERSTELLUNG EINER TUBE UNTER VERWENDUNG DES ROHRKÖRPERS**
PROCESS FOR MANUFACTURING A TUBULAR BODY AND PROCESS FOR MANUFACTURING A TUBE BY USING THE TUBULAR BODY
PROCEDE DE FABRICATION DE CORPS TUBULAIRES ET PROCEDE DE FABRICATION DE TUBES A PARTIR DE CES CORPS TUBULAIRES

(30) Priorität: 19.06.1995 DE 19522169
(43) Veröffentlichungstag der Anmeldung: 08.04.1998
(73) Patentinhaber: AISA AUTOMATION INDUSTRIELLE SA, 1896 Vouvry (CH)
(72) Erfinder: KELLER, Gerhard, CH-1805 Jongny (CH)
(74) Vertreter: Zellentin, Rüdiger
(86) Internationale Anmeldenummer: EP9602645
(87) Internationale Veröffentlichungsnummer: WO9700208

(56) Entgegenhaltungen:
- EP-A- 0 340 657
- DE-A- 2 453 492
- GB-A- 1 030 275
- US-A- 3 788 520
- US-A- 4 089 437

## Beschreibung

Die Erfindung betrifft ein Verfahren zur Herstellung eines insbesondere mehrschichtigen Rohrkörpers mit mindestens einer sich über seine Länge erstreckenden nebeneinander liegenden Längskammern bildenden Trennwand unter Verwendung eines Folienbandes.

Aus der DE-A1- 24 53 492 ist ein gattungsgemäßes Verfahren zur Herstellung eines Rohrkörpers für einen tubenähnlichen Behälter bekannt, nach der eine mehrschichtige dünne Platte so gewunden, schaftförmig gemacht und zusammengefügt ist, daß einstückig die rohrförmige Wand, eine zentrale oder sehnenförmig verlaufende Zwischenwand und sich in Umfangsrichtung erstreckende überlappte längsverlaufende Nähte ausgebildet werden. Die sich in Umfangsrichtung erstreckenden Überlappungsbereiche sind durch Wärme abgedichtet oder verschweißt, so daß sich längserstreckende Überlappungsverbindungen oder Nähte bilden. Die Zwischenwand teilt den Raum innerhalb des rohrförmigen Körpers in zwei sich längs erstreckende Kammern, die nebeneinander liegend angeordnet sind.

Das Herstellen der dünnen Platten, die Formung des gleichmäßigen Rohrkörpers mit innerer Zwischenwand und die Herstellung der beiden Längsnähte sind relativ aufwendig.

Es ist ferner bekannt zur Herstellung von zwei- oder mehrkammerigen Tuben mit rundem oder ovalem Querschnitt Rohrkörper im Spritzgießverfahren, siehe z. B. US-A-3 788 520 oder durch Bildung einer Überlappungsnaht aus einem Folienband, siehe z. B. GB-PS 1 030 275 herzustellen und dann In einem weiteren Schritt in den Rohrkörper eine Zwischenwand einzuführen und gegebenenfalls mit dem Rohrkörper fest zu verbinden.

Die Einbringung einer Zwischenwand und deren Verankerung bzw. dichte Befestigung in einem hergestellten Rohrkörper ist äußerst aufwendig und erfordert viele Arbeitsschritte, die eine hohe Produktionsgeschwindigkeit verhindern.

Die nach den bekannten Verfahren hergestellten Rohrkörper werden mit einem vorgefertigten oder angespritztem Tubenkopf verbunden, der auch einen Trennsteg zur Verbindung mit der Trennwand aufweist, der bis in die Ausgabeöffnung reicht. Über der Ausgabeöffnung ist ein die Ausgabeöffnung überdeckender und am Trennsteg anliegender Verschluß vorgesehen.

Aus der US-A-2 939 610 ist eine Zweikammertube bekannt, wobei zwei rohrförmige Körper ineinander angeordnet sind. Die vorgesehene Verschlußkappe weist einen inneren zylindrischen Vorsprung auf, der im Schließzustand der Verschlußkappe auf dem Tubenkopf mit dem unterhalb der Oberkante der Ausgabeöffnung endenden Trennsteg kommuniziert und die beiden Kammern auch im Tubenkopf voneinander abtrennt.

Aufgabe der Erfindung ist es, ein Verfahren zur Herstellung eines insbesondere mehrschichtigen Rohrkörpers mit mindestens einer sich über seine Länge erstreckenden nebeneinander liegende Längskammern bildenden Trennwand unter Verwendung eines Folienbandes anzugeben, das einfach und schnell durchführbar ist und es auch erlaubt, beliebig lange Rohrkörper herzustellen.

Aufgabe der Erfindung ist es ferner, ein Verfahren zur Herstellung von Tuben unter Verwendung von nach dem neuen Verfahren hergestellten Rohrkörpern anzugeben.

Die Aufgabe wird durch ein Verfahren zur Herstellung eines insbesondere mehrschichtigen Rohrkörpers mit mindestens einer sich über seine Länge erstreckenden nebeneinander liegende Längskammern bildenden Trennwand unter Verwendung eines Folienbandes gelöst, wobei zunächst auf dem Folienband oder einem abgelängten Folienbandabschnitt ein Trennwandstreifen bzw. ein abgelängter Trennwandstreifenabschnitt in paralleler Ausrichtung zum Folienband bzw. Folienbandabschnitt mit seinen äußeren Rändern befestigt wird und dann die Seitenkanten zur Bildung eines endlosen Rohres, von dem dann Rohrkörper abgelängt werden, bzw. direkt eines Rohrkörpers miteinander verbunden werden.

Vorteilhafte Ausgestaltungen des Verfahrens sind den Ansprüchen 2 bis 9 zu entnehmen.

Dem Anspruch 10 ist ein vorteilhaftes Verfahren zur Herstellung einer Tube unter Verwendung des erfindungsgemäß hergestellten Rohrkörpers zu entnehmen. Die Ansprüche 11 bis 14 enthalten vorteilhafte Weiterbildungen des Verfahrens gemäß Anspruch 10.

Nachstehend wird die Erfindung anhand von Ausführungsbeispielen unter bezug auf Zeichnungen näher erläutert. Es zeigt:
- Fig. 1: eine Zweikammertube mit Schraubverschluß im Längsschnitt;
- Fig. 2: einen Querschnitt durch eine Folie zur Herstellung eines Rohrkörpers mit zwei Kammern;
- Fig. 3: einen aus der Folie gemäß Fig. 2 hergestellten Rohrkörper im Schnitt;
- Fig. 4: einen Querschnitt durch eine weitere Folie zur Herstellung eines Rohrkörpers mit zwei Kammern;
- Fig. 5: einen aus der Folie gemäß Fig. 4 hergestellten Rohrkörper im Schnitt;
- Fig. 6: eine perspektivische Darstellung einer dritten Folie zur Herstellung eines Rohrkörpers mit zwei Kammern;
- Fig. 7: einen aus der Folie gemäß Fig. 6 hergestellten Rohrkörper im Schnitt;
- Fig. 8: einen Ausschnitt einer Zweikammertube mit Klappverschluß im Längsschnitt;
- Fig. 9: einen Ausschnitt aus Fig. 8, der das Zusammenwirken des Trennstegs mit dem Vorsprung der Verschlußkappe im vergrößerten Maßstab zeigt.

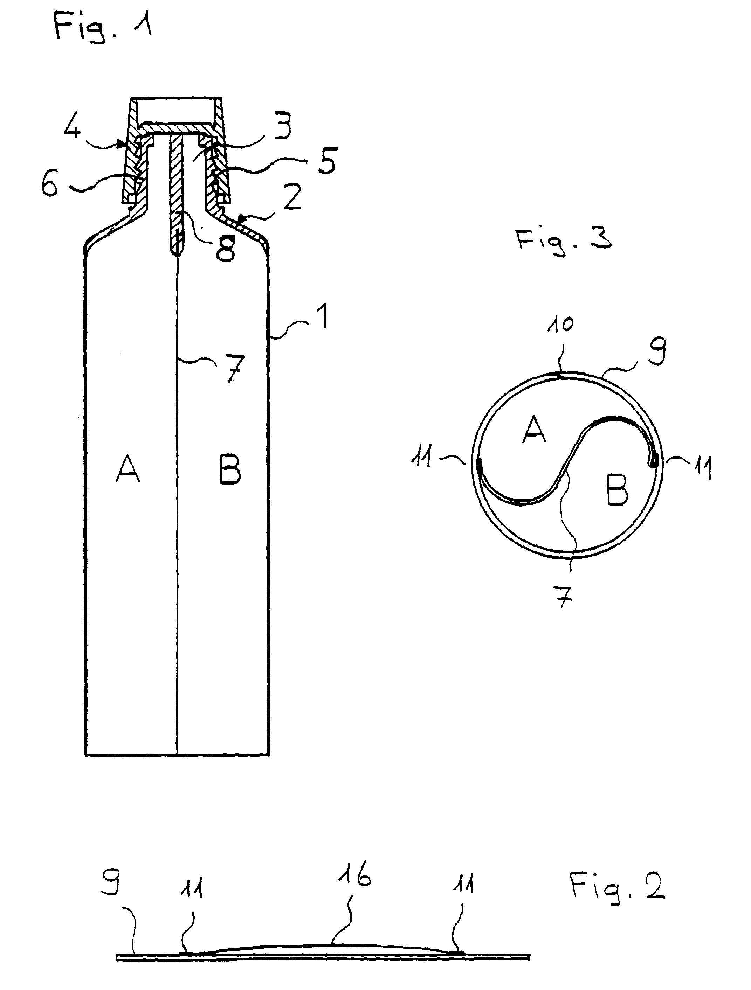

Die in Fig. 1 schematisch dargestellte Tube weist einen Rohrkörper 1 auf, der mit einem Tubenkopf 2 fest verbunden ist. Im Tubenkopf 2 ist eine stutzenförmige Ausgabeöffnung 3 ausgeführt, die durch eine Verschlußkappe 4 verschließbar ist. Im Ausführungsbeispiel gemäß Fig. 1 ist die Verschlußkappe 4 als Schraubkappe 5 ausgeführt, die auf ein die stutzenförmige Ausgabeöffnung 3 umgebendes Außengewinde 6 aufschraubbar ist. Im Rohrkörper 1 ist eine Trennwand 7 angeordnet, die den Rohrkörper 1 in zwei Längskammern A und B unterteilt. In der Verlängerung der Trennwand 7 weist der Tubenkopf 2 einen sich beim Ausführungsbeispiel gemäß Fig. 1 bis in die Schließebene der Ausgabeöffnung 3 erstreckenden Trennsteg 8 auf.

Der Rohrkörper 1 kann aus einem beliebigen bekannten Einoder Mehrschichtmaterial mit oder ohne Sperrschicht aus einem Folienband 9 durch Bildung einer Verbindungsnaht 10 z. B. einer Überlappungsnaht mittels der äußeren Ränder des Folienbandes 9 hergestellt werden.

Der Tubenkopf 2 kann ein- oder mehrschichtig mit oder ohne Sperrschicht separat hergestellt sein und mit dem Rohrkörper 1, z. B. durch Schweißen verbunden sein. Er kann aber auch durch direktes Anformen von plastifiziertem Kunststoffmaterial am vorgefertigten Rohrkörper 1 hergestellt werden.

Die Trennwand 7 kann aus dem gleichen Material wie der Rohrkörper 1 oder auch aus einem anderen beliebigen bekannten und geeigneten Material mit oder ohne Sperrschicht bestehen. Vorzugsweise besteht die Trennwand 7 aus einem Material mit einer Stärke von 50 bis 100 µ, d. h. seine Stärke ist deutlich geringer als die der Folie für den Rohrkörper 1, die üblicherweise zwischen 300 und 500 µ besteht. Beispielsweise kann die Trennwand 7 aus LDPE (Low Density Polyethylen) bestehen. Es hat sich erwiesen, daß je dünner die Trennwand 7 gestaltet ist, desto gleichmäßiger ist die gemeinsame Ausgabe aus den beiden Kammern A und B.

Der Tubenkopf 2 kann, wenn eine absolute Trennung der Produktkomponenten, die in den Längskammern A und B aufgenommen werden sollen, vor ihrer Ausgabe nicht erforderlich ist, auch ohne Trennsteg 8 ausgeführt sein, so daß sich im Tubenkopf quasi eine Mischkammer ergibt.

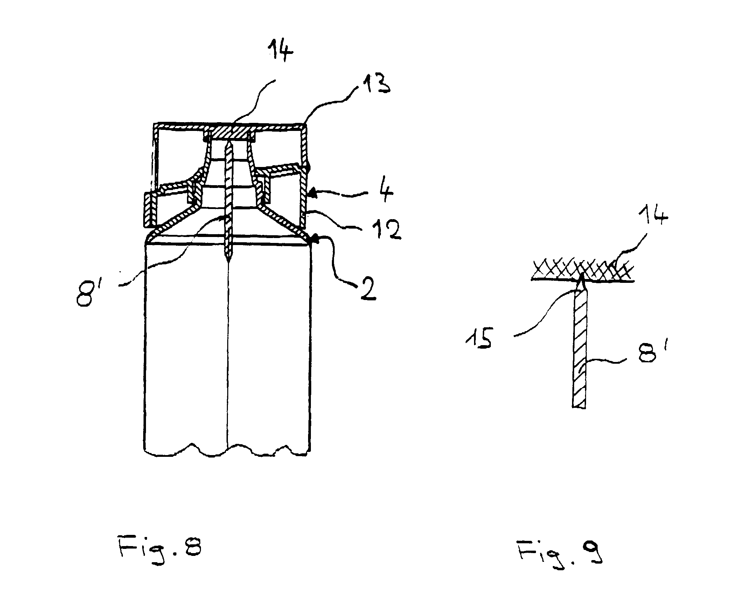

Wenn diese Trennung jedoch erforderlich ist, muß der Trennsteg 8 an der Kontaktstelle des Tubenkopfes 2 mit dem Rohrkörper 1 im Querschnitt der Form der Trennwand 7 entsprechen bzw. angepaßt sein. Vorzugsweise wird das obere Ende der Trennwand 7 am Trennsteg 8 bzw. umgekehrt derart befestigt, daß die Längskammern A, B bis in die durch die Verschlußkappe 4 verschlossene Ausgabeöffnung 3 voneinander getrennt sind. Vorzugsweise schließt das untere Ende des Trennstegs 8 das obere Ende der Trennwand 7 ein (s. Fig. 1). Das untere Ende des Trennstegs 8, 8' kann auch über das Basisniveau des Tubenkopfes 2 hinausragen, wie dies deutlich in Fig. 8 zu sehen ist.

Bei dem in Fig. 1 dargestellten Ausführungsbeispiel endet das obere Ende des Trennstegs 8 in der Schließebene der Ausgabeöffnung 3, d. h. der obere Rand der die Ausgabeöffnung 3 umgebenden Wandung und die Oberkante des Trennsteges 8 liegen in der gleichen Ebene. Auf ihnen (Rand und Oberkante) liegt die aufgesetzte Verschlußkappe 4 in ihrer Schließstellung dicht an und verhindert, daß die Produktkomponenten der beiden Längskammern A, B miteinander in Kontakt treten können. Hierbei teilt der Trennsteg 8 auch die gesamte Länge der Ausgabeöffnung 3 in vorzugsweise zwei gleiche Teile.

Eine Variante kann darin bestehen, siehe z. B. die Verschlußkappe 4 in Fig. 8, die als Klappverschluß 12 mit angelenktem verschwenkbaren Deckel 13 dargestellt ist, daß die Oberkante des Trennsteges 8 im Tubenkopf 2 unterhalb des oberen Randes der Ausgabeöffnung 3 endet. Um in diesem Fall auch ein vollständiges Trennen der beiden Komponenten in den Längskammern A, B bei geschlossener Tube zu gewährleisten, weist dann die Verschlußkappe 4 einen dem Querschnitt der Ausgabeöffnung 3 entsprechenden, vorzugsweise zylindrische Teile aufweisenden, Vorsprung 14 (Fig. 8) auf, der in der Schließstellung der Verschlußkappe 4 dicht an der freien Oberkante des Trennstegs 8' anliegt und die Trennung der beiden Längskammern A, B gewährleistet. Gegebenenfalls kann der Vorsprung auch eine andere an die Ausgabeöffnung 3 angepaßte Form sowie Dichtkanten und/oder elastische Elemente aufweisen.

Der Klappverschluß 12 kann am Tubenkopf 2 mittels einer Schnappverbindung (s. Fig. 8), Schraub- oder auch durch eine feste Schweiß- oder Klebverbindung befestigt sein.

Wie insbesondere Fig. 9 zu entnehmen ist, kann das freie obere Ende des Trennstegs 8 eine - vorzugsweise messerartige - vorspringende Dichtkante 15 aufweisen.

Die Dichtkante 15 kann elastisch nachgiebig - insbesondere bei Drehverschlüssen - oder auch starr - insbesondere bei Klappverscblüssen - gestaltet sein. Wenn die Dichckante 15 starr gestaltet ist, sollte der Vorsprung 14 der Verschlußkappe 4 vorzugsweise eine nachgiebige elastische Gegenfläche aufweisen, in die die Dichtkante 15 zur Gewährleistung einer praktisch absoluten Dichtheit etwas eindringen kann (s. Fig. 9), bei flexibler nachgiebiger Ausgestaltung der vorspringenden Dichtkante 15 kann eine Art Vorspannung erzielt werden, die auch dann Dichtigkeit gewährleistet, wenn in den Kammern A, B ein Überdruck herrscht.

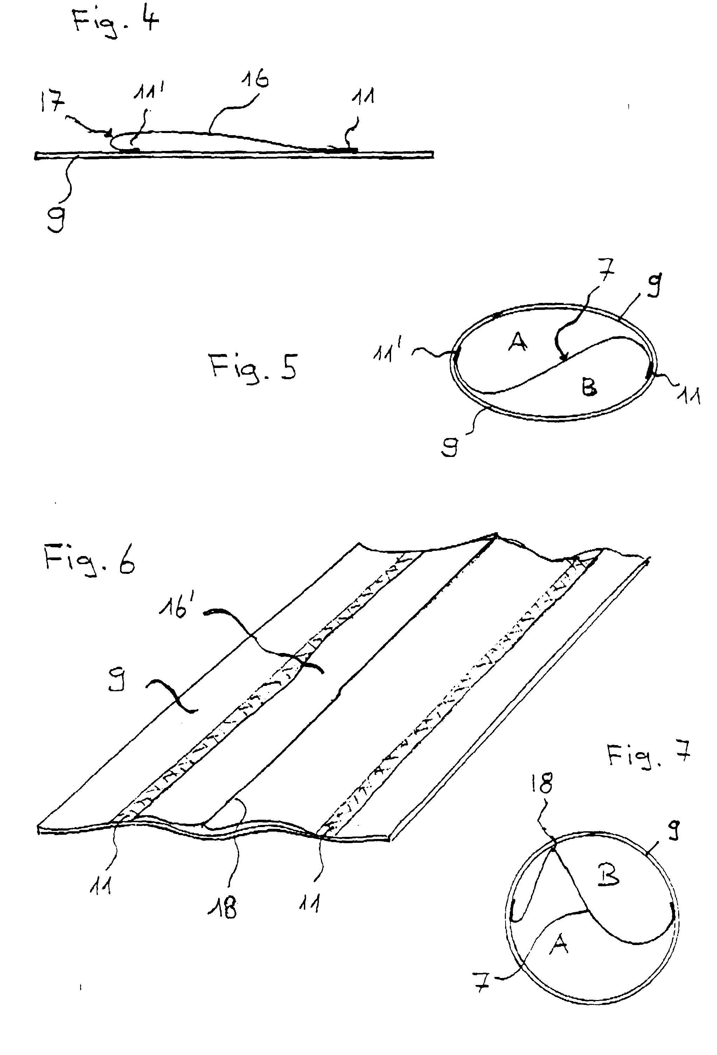

Der Rohrkörper 1 für eine Tube mit Trennwand 7 kann auf einfache Art und Weise dadurch hergestellt werden, daß auf ein endloses Folienband 9 (s. Fig. 2, 4 und 6) zur Herstellung eines bekannten Tubenkörpers kontinuierlich ein endloser Trennwandstreifen 16, 16' in paralleler Ausrichtung zum Folienband 9 angeordnet und mit seinen beiden äußeren als Befestigungsstreifen 11 dienenden Rändern eben (Fig. 2) oder - einmal eben und einmal am Rand umgeschlagen - als Umschlagfalz 17 (Fig. 4) - fest mit dem Folienband 9 verbunden wird, z. B durch Verschweißen oder Verkleben. Wird der Trennwandstreifen 16 an einem Rand eben und am anderen Rand sich überlappend mit Umschlagfalz 17 am Folienband 9 (s. Fig. 4) befestigt, liegen die Trennwandseitenkanten jeweils tangential an der Rohrkörperwandung (s. Fig. 5) an. Aus dem so hergestellten Vormaterial wird dann in einem zweiten Schritt ein Rohr nach einem bekannten Verfahren z. B. durch Bildung einer Überlappungsnaht hergestellt. Nachfolgend werden einzelne Rohrkörper gewünschter Länge vom Rohr abgetrennt.

Es besteht auch die Möglichkeit, zunächst das Folienband 9 in Abschnitte gewünschter Länge zu zerteilen, auf die dann entsprechend abgelängte Trennwandstreifenabschnitte aufgebracht und dort befestigt werden, z. B. durch Verschweißen oder Kleben. Aus den so hergestellten Vormaterialabschnitten können dann z. B. durch einen Wickelvorgang mit Verbindung der Überlappung durch Verschweißen oder Verkleben einzelne Rohrkörper 1 vorgegebener Länge hergestellt werden.

Dem Rohr und den Rohrkörpern 1 kann eine kreisgrunde (Fig. 3 und 7) oder eine ovale (Fig. 5) Querschnittsform verliehen werden.

Bei dem in Fig. 6 dargestellten Ausführungsbeispiel weist der auf das Folienband 9 aufgebrachte Trennwandstreifen 16' einen parallel zu den Befestigungsstreifen 11 und damit auch parallel zur Längserstreckung des Folienbandes 9 ausgerichteten Knickfalz 18 auf. Wie aus Fig. 7 ersichtlich ermöglicht ein Knickfalz 18- gegebenenfalls auch zwei oder mehrere, auch einander entgegengerichtete Knickfalze (nicht dargestellt) eine vorgegebene Ausrichtung der Trennwand 7 innerhalb des Rohrkörpers 1, die durch die Anordnung des Knickfalzes 18 bzw. der Knickfalze im Querschnitt des Trennwandstreifens 16' variiert werden kann. Insbesondere im Falle von sehr geringen Trennwandstreifenstärken sind derartige Knickfalze vorteilhaft, da sie gleich große oder auch beliebig große gewünschte Querschnittsöffnungen der Kammern A und B ermöglichen, wie sie zu ihrer Befüllung erforderlich sind.

Eine vorzugsweise Anordnung eines Knickfalzes 18 im Trennwandstreifen 16' kann darin bestehen, daß der Trennwandstreifen 16' im Verhältnis 1:3 bis 1:5 unterteilt wird.

Es besteht auch die Möglichkeit, mehrere Trennwandstreifen zur Herstellung von mehr als zwei Längskammern anzuordnen oder einen breiteren Trennwandstreifen auch zwischen seinen Rändern am Folienband zu befestigen (nicht dargestellt). Da die Befestigung entlang von Linien erfolgt, können die gewünschten Raumverhältnisse der einzelnen Kammern exakt vorbestimmt werden, wobei es natürlich auch möglich ist, den Trennwandstreifen auch im Querschnitt wellenförmig vorzuformen und mit den parallelen Wellentälern am planen oder auch gewelltem Folienband zu befestigen. Hierbei sollte gegebenenfalls jeder unterteilte Abschnitt eines Trennwandstreifens bzw. jeder einzelne Trennwandstreifen wenigstens einen Knickfalz aufweisen. Es ist somit ohne größeren Aufwand möglich, Kammern mit gleichen oder beliebigen anderen Raumverhältnissen herzustellen. Erforderlichenfalls müssen die Trennstege im Tubenkopf der jeweiligen Anzahl und Form der Trennwände angepaßt werden.

Beim Vorhandensein mehrerer Kammern kann eine Kammer oder können gegebenenfalls auch mehrere Kammern mit einem Treibmittel gefüllt werden, das einerseits ein leichteres Entnehmen des Füllmaterials und andererseits auch dann ein schönes rundes Aussehen der Mehrkammertube gewährleistet, wenn das Füllmaterial nahezu entleert ist.

## Patentansprüche

1. Verfahren zur Herstellung eines insbesondere mehrschichtigen Rohrkörpers (1) mit mindestens einer sich über seine Länge erstreckenden nebeneinander liegende Längskammern (A, B) bildenden Trennwand (7), unter Verwendung eines Folienbandes (9), dadurch gekennzeichnet, daß zunächst auf dem Folienband (9) oder einem abgelängten Folienbandabschnitt ein Trennwandstreifen (16, 16') bzw. ein abgelängter Trennwandstreifenabschnitt in paralleler Ausrichtung zum Folienband bzw. Folienbandabschnitt mit seinen äußeren Rändern (11) befestigt wird und dann die Seitenkanten des Folienbandes bzw. des Folienbandabschnitts zur Bildung eines endlosen Rohres, von dem dann Rohrkörper (1) abgelängt werden, bzw. direkt eines Rohrkörpers miteinander verbunden werden.

2. Verfahren nach Anspruch 1, dadurch gekennzeichnet, daß der Trennwandstreifen (16, 16') bzw. Trennwandstreifenabschnitt mindestens an einem Rand als Umschlagfalz (17) umgeschlagen auf dem Folienband (9) bzw. Folienbandabschnitt befestigt wird.

3. Verfahren nach Anspruch 1 oder 2, dadurch gekennzeichnet, daß der Trennwandstreifen (16, 16') bzw. Trennwandstreifenabschnitt zusätzlich zwischen seinen äußeren Rändern zur Bildung mehrerer Kammern am Folienband (9) bzw. Folienbandabschnitt befestigt wird.

4. Verfahren nach einem der Ansprüche 1 bis 3, dadurch gekennzeichnet, daß der Trennwandstreifen (16, 16') bzw. Trennwandstreifenabschnitt wellenförmig geformt mit seinen Wellentälern am Folienband (9) bzw. Folienbandabschnitt befestigt wird.

5. Verfahren nach einem der Ansprüche 1 bis 4, dadurch gekennzeichnet, daß die Trennwandstreifen (16, 16') bzw. Trennwandstreifenabschnitte aus einem anderen Kunststoffmaterial als dem des Folienbandes (9) bzw. Folienbandabschnittes verwendet werden.

6. Verfahren nach einem der Ansprüche 1 bis 5, dadurch gekennzeichnet, daß im Trennwandstreifen (16, 16') bzw. Trennwandstreifenabschnitt mindestens ein parallel zu seinen Befestigungsrändern verlaufender Knickfalz (18) ausgeführt wird.

7. Verfahren nach Anspruch 6, dadurch gekennzeichnet, daß ein Knickfalz (18) derart ausgeführt wird, daß er den Trennwandstreifen (16, 16') bzw. Trennwandstreifenabschnitt im Verhältnis 1:3 bis 5 unterteilt.

8. Verfahren nach einem der Ansprüche 1 bis 7, dadurch gekennzeichnet, daß Trennwandstreifen (16, 16') bzw. Trennwandstreifenabschnitte mit einer Stärke von 50 µ bis 100 µ eingesetzt werden.

9. Verfahren nach einem der Ansprüche 1 bis 8, dadurch gekennzeichnet, daß das Rohr bzw. der Rohrkörper (1) mit ovalem Querschnitt hergestellt wird.

10. Verfahren zur Herstellung einer Tube dadurch gekennzeichnet, daß ein Rohrkörper (1) hergestellt wird nach dem Verfahren gemäß einem der Ansprüche 1 bis 9 und daß der Rohrkörper (1) mit einem der Anordnung der Trennwände (7) im Rohrkörper (1) entsprechende Trennstege (8, 8') aufweisenden Tubenkopf (2) mit wenigstens einer durch einen Verschluß verschließbaren Ausgabeöffnung (3) fest verbunden wird.

11. Verfahren nach Anspruch 10, dadurch gekennzeichnet, daß jeder Trennsteg (8') derart hergestellt wird, daß er unterhalb der Schließebene der Ausgabeöffnung (3) endet, und daß der Verschluß so ausgeführt wird, daß er einen Vorsprung (14) aufweist, der in der Schließstellung dicht den unterteilten Teil der Ausgabeöffnung (3) verschließend am Trennsteg (8') anliegt.

12. Verfahren zur Herstellung einer Tube nach einem der Ansprüche 10 oder 11, dadurch gekennzeichnet, daß das obere freie Ende des Trennsteges (8, 8') im Bereich der Ausgabeöffnung (3) mit einer Dichtkante (15) versehen wird.

13. Verfahren zur Herstellung einer Tube nach einem der Ansprüche 10 bis 12, dadurch gekennzeichnet, daß das untere freie Ende des Trennsteges (8, 8') derart hergestellt wird, daß es über das Basisniveau des Tubenkopfes (2) nach unten hinausragt.

14. Verfahren zur Herstellung einer Tube nach einem der Ansprüche 10 bis 13, dadurch gekennzeichnet, daß das untere freie Ende des Trennsteges (8, 8') derart mit der Oberkante der Trennwand (7) verbunden wird, daß die Oberkante der Trennwand (7) vom Trennsteg (8, 8') eingeschlossen wird.

## Claims

1. Process for producing an, in particular, multi-layered pipe member (1) with at least one partition wall (7) which extends over its length and forms adjacent longitudinal chambers (A, B), using a foil strip (9), characterised in that a partition wall strip (16, 16') or a cut-to-length partition wall strip portion is initially fastened on the foil strip (9) or a cut-to-length foil strip portion in a parallel orientation to the foil strip or foil strip portion by its outer edges (11) and the lateral edges of the foil strip or of the foil strip portion are connected to one another to form a continuous pipe, from which pipe members (1) are then cut to length, or to form a pipe member directly.

2. Process according to claim 1, characterised in that the partition wall strip (16, 16') or partition wall strip portion is folded back at least at one edge as a fold (17) and is fastened on the foil strip (9) or the foil strip portion.

3. Process according to claim 1 or 2, characterised in that the partition wall strip (16, 16') or partition wall strip portion is additionally fastened between its outer edges to form a plurality of chambers on the foil strip (9) or foil strip portion.

4. Process according to one of claims 1 to 3, characterised in that the partition wall strip (16, 16') or partition wall strip portion with an undulating shape is fastened on the foil strip (9) or foil strip portion with the troughs of the corrugations.

5. Process according to one of claims 1 to 4, characterised in that the partition wall strips (16, 16') or partition wall strip portions made of a plastic material different from that of the foil strip (9) or foil strip portion are used.

6. Process according to one of claims 1 to 5, characterised in that in the partition wall strip (16, 16') or partition wall strip portion there is made at least one kink (18) extending parallel to its fastening edges.

7. Process according to claim 6, characterised in that a kink (18) is formed in such a way that it divides the partition wall strip (16, 16') or partition wall strip portion in a ratio of 1:3 to 5.

8. Process according to one of claims 1 to 7, characterised in that partition wall strips (16, 16') or partition wall strip portions with a thickness of 50 µ to 100 µ are used.

9. Process according to one of claims 1 to 8, characterised in that the pipe or pipe member (1) is produced with an oval cross section.

10. Process for producing a tube, characterised in that a pipe member (1) is produced by the process according to one of claims 1 to 9 and in that the pipe member (1) is rigidly connected to a tube head (2) comprising webs (8, 8') corresponding to the arrangement of the partition walls (7) in the pipe member (1) with at least one outlet orifice (3) which can be closed by a closure.

11. Process according to claim 10, characterised in that each web (8') is so produced that it ends below the closing plane of the outlet orifice (3) and that the closure is formed in such a way that it has a projection (14) which rests on the web (8') so as to close the divided part of the outlet orifice (3) tightly in the closed position.

12. Process for producing a tube according to one of claims 10 or 11, characterised in that the upper free end of the web (8, 8') is provided with a sealing edge (15) in the region of the outlet orifice (3).

13. Process for producing a tube according to one of claims 10 to 12, characterised in that the lower free end of the web (8, 8') is so produced that it projects downward beyond the base level of the tube head (2).

14. Process for producing a tube according to one of claims 10 to 13, characterised in that the lower free end of the web (8, 8') is connected to the upper edge of the partition wall (7) such that the upper edge of the partition wall (7) is enclosed by the web (8, 8').

## Revendications

1. Procédé de fabrication d'un corps tubulaire (1), en particulier d'un corps tubulaire à couches multiples, comportant au moins une paroi de séparation (7), s'étendant au-delà de sa longueur et formant des chambres longitudinales adjacentes (A, B), avec utilisation d'une bande de feuille (9), caractérisé en ce qu'une bande de paroi de séparation (16, 16') ou une section de bande de paroi de séparation mise à longueur est d'abord fixée avec ses bords externes (11) sur la bande de feuille (9) ou sur une section de la bande de feuille mise à longueur, dans une orientation parallèle à la bande de feuille ou à la section de la bande de feuille, les bords latéraux de la bande de feuille ou de la section de la bande de feuille, ou directement d'un corps tubulaire, étant ensuite reliés en vue de la formation d'un tube continu, le corps tubulaire (1) étant ensuite découpé de celui-ci.

2. Procédé selon la revendication 1, caractérisé en ce que la bande de la paroi de séparation (16, 16') ou la section de la bande de la paroi de séparation est repliée au moins au niveau d'un bord sous forme d'une rainure de pliage (17) et est fixée sur la bande de feuille (9) ou la section de la bande de feuille.

3. Procédé selon les revendications 1 ou 2, caractérisé en ce que la bande de la paroi de séparation (16, 16') ou la section de la bande de la paroi de séparation est en outre fixée entre ses bords externes à la bande de feuille (9) ou à la section de la bande de feuille en vue de la formation de plusieurs chambres.

4. Procédé selon l'une des revendications 1 à 3, caractérisé en ce que la bande de la paroi de séparation (16, 16') ou la section de la bande de la paroi de séparation est fixée sous une forme ondulée avec les creux de ses vagues à la bande de feuille (9) ou à la section de la bande de feuille.

5. Procédé selon l'une des revendications 1 à 4, caractérisé en ce que les bandes de la paroi de séparation (16, 16') ou les sections des bandes de la paroi de séparation sont composées d'un autre matériau plastique que la bande de feuille (9) ou la section de la bande de feuille.

6. Procédé selon l'une des revendications 1 à 5, caractérisé qu'au moins une rainure de flexion (18), s'étendant parallèlement à ses bords de fixation, est formée dans la bande de la paroi de séparation (16, 16') ou dans la section de la bande de la paroi de séparation.

7. Procédé selon la revendication 6, caractérisé en ce qu'une rainure de flexion (18) est exécutée de sorte à subdiviser la bande de la paroi de séparation (16,16') ou la section de la bande de la paroi de séparation dans un rapport compris entre 1:3 et 5.

8. Procédé selon l'une des revendications 1 à 7, caractérisé en ce que la bande de la paroi de séparation (16, 16') ou les sections des bandes de la paroi de séparation ont une épaisseur comprise entre 50 µ et 100 µ.

9. Procédé selon l'une des revendications 1 à 8, caractérisé en ce que le tube ou le corps tubulaire (1) a une section ovale.

10. Procédé de fabrication d'un tube, caractérisé en ce qu'un corps tubulaire (1) est fabriqué selon le procédé selon l'une des revendications 1 à 9 et en ce que le corps tubulaire (1) est relié fermement à une tête du tube (2) comportant des traverses de séparation (8, 8') correspondant à l'agencement des parois de séparation (7) dans le corps tubulaire (1). et comportant au moins une ouverture de sortie (3) pouvant être fermée par une fermeture.

11. Procédé selon la revendication 10, caractérisé en ce que chaque traverse de séparation (8') et fabriquée de sorte à se terminer au-dessus du plan de fermeture de l'ouverture de sortie (3) et en ce que la fermeture est exécutée de sorte à présenter une saillie (14), reposant dans la position de fermeture sur la traverse de séparation (8'), fermant de façon étanche la partie subdivisée de l'ouverture de sortie (3).

12. Procédé de fabrication d'un tube selon l'une des revendications 10 ou 11, caractérisé en ce que l'extrémité supérieure libre de la traverse de séparation (8, 8') est équipée dans la région de l'ouverture de sortie (3) d'un bord d'étanchéité (15).

13. Procédé de fabrication d'un tube selon l'une des revendications 10 à 12, caractérisé en ce que l'extrémité inférieure libre de la traverse de séparation (8, 8') est fabriquée de sorte à déborder vers le bas au-delà du niveau de base de la tête du tube (2).

14. Procédé de fabrication d'un tube selon l'une des revendications 10 à 13, caractérisé en ce que l'extrémité inférieure libre de la traverse de séparation (8, 8') est reliée au bord supérieur de la paroi de séparation (7) de sorte que le bord supérieur de la paroi de séparation (7) est renfermé par la traverse de séparation (8, 8').
